# EUROPEAN PATENT SPECIFICATION

(11) **EP 1 278 697 B1**
(45) Date of publication and mention of the grant of the patent: **02.03.2005**
(21) Application number: 01918123.9
(22) Date of filing: 03.04.2001
(51) Int. Cl.: B67D 3/00, B67D 5/04

(54) **A METHOD WHEN TANKING UP USING A TANKING UP VALVE**
VERFAHREN ZUM TANKEN UND TANKVENTIL
PROCEDE DE REMPLISSAGE UTILISANT UN CLAPET DE REMPLISSAGE

(30) Priority: 07.04.2000 SE 0001324
(43) Date of publication of application: 29.01.2003
(73) Proprietor: Wessberg, Kaj, S-361 00 Emmaboda (SE)
(72) Inventor: Wessberg, Kaj, S-361 00 Emmaboda (SE)
(74) Representative: Bjelkstam, Peter
(86) International application number: PCT/SE2001/000722
(87) International publication number: WO 2001/077005

(56) References cited:
- WO-A2-97/28083
- US-A- 3 635 264
- US-A- 4 958 668
- US-A- 4 998 560

## Description

The invention relates to a valve according to the preamble of claim 1, known for instance from US-A-4 958 668, for a closed procedure at tanking up or refilling, for instance, motor driven equipment for wood and garden and vehicles to make the refilling easier and this in such a way that no gas and/or fuel leaks out in the surroundings.

The refilling outfits to be found in the market in this category are today open arrangements for refilling motor driven equipment and vehicles. The common procedure at refilling is just to let the fuel flow into the equipment tank from the refilling outfit. This refilling outfit is then put into the open hole of the equipment tank without creating a tight connection against the equipment tank so that a leakage of fuel and hazardous chemical waste and inflammable gases during the refilling are created. However in order to reduce this leakage today simplier solutions are used, especially when refilling power saws, and here a male part of the tanking device is inserted into a female part of the equipment tank. When connecting these parts together, a stop in the tanking device is pushed into the equipment tank so that a valve is opened. In this case the male and female parts do not tighten against each other so that gases and fuel leaks out. This tanking device is furthermore very big and unwieldy and take too much space e.g. a motor saw or a clearing up equipment, so that its female or male part can fasten at cloths or something else around during use, so that irritation and waste of time arise. Further this tanking device only permits a slow refilling , since the gases from the equipment tank are pressed out from the female part to the surrounding air at the same time as the refilling takes place. These leaking gases also may create injuries to the user's breathing organ and lungs along with the danger of fire and the environment problems which also arise.

An object of the present invention is to eliminate these disadvantages which exist at the refilling devices stated above. According to the invention a tanking valve has been constructed, which creates a totally closed room between the refilling outfit and the equipment tank. The function is, that when refilling, the gases in the equipment tank change place with the fuel from the refilling outfit without any leakage of gases or fuel.

According to the invention a tanking valve is provided, which consists of a male part and a female part. The male part is located at the refilling outfit and the female part is located at the equipment tank. The male part can with simple grips be connected to different kinds of couplings and screw-threads, which are to be found on different types of refilling outfits and closes by that totally tight against the refilling outfit. The female part is furnished with an intermediate packing against the refilling outfit. The male part shows a housing, including a male part spring, pressing a lid in the front against a lid stop, so that said lid closes tightly to the lid stop. This uncomplicated construction does not take up much place. The female part also shows a housing, including a female part spring and a piston, showing a covering part. Between the covering part, located nearest to the outside air in the house there is a slide, movable applied to the cover part, via a radial coned side, allowing the slide and the cover part only to be separated in one direction, as the male part presses against the slide and pushes the cover part forward. The female part shows a mainly flat surface to the spectator, when it is closed. The slide shows a recess, creating a resting surface towards the interior of the housing, because of the upper fixation of the female part which also spares room, so that the female part does not take too much place in the equipment tank. The slide shows also a groove with a radial extension so that an 0-ring, which tightens between the house and the slide against a tightening-surface, is steered and fixed in the groove. The piston fits in a guiding hole towards the bottom of the housing, where it is movably located and locked outside the bottom of the housing with a locking device. During a pressure by the male part against the slide and the cover part these can together be moved a short first distance, as the first part of the piston is thinner than the guiding hole, whereupon the piston gets wider than the guiding hole closer to the cover part and then gets a continued movement prevented against a piston stop. At refilling in a step 1, the male part is pressed into the female part, at which the lid presses against the cover part and/or the slide, which are then tightly connected together this first length, at which these are pressed down in the female part until the piston stops. In this phase the tanking valve is still quite tight. The tightening surface is here of use between the male part and the female part, as this tightening surface is located at the inside of the female part and the outside of the male part, which touch each other. The tightening surfaces help the user to guide the male part into the female part and to create a tight connection at continued movement before the tanking valve has been opened. With other words you have in this phase three tightenings as follows: Between the slide and the cover part, between the lid and the lid stop and at said tightening surfaces. In the beginning of step 2, the male part is pressed deeper into the female part, whereby the slide is set free from the cover part since the piston has stopped against the piston stop, so that a communication is created between the refilling outfit and the equipment tank, at which a joined tight room of these two spaces is created. When the male part, during finishing of step 2, reaches the bottom in the female part, a maximal opening is established, at which the fuel flows down into the equipment tank during simultaneous exchange of gas in stead of fuel in respective tank, so that practically no leakage is caused, neither of fuel, nor of gas. The equipment tanking is completed very quickly as the gas presses the fuel, that, in turn presses the gas in the closed system. When the tanking is finished the male part is pulled out of the female part, at which the slide and the cover part again are tight by taking the position they had, when step 1 was finished. The male part and the female part are now closed again at the same time as the tightening surfaces tighten again. At last, male part and female part are separated whereby the refilling is finished. In order to make the tanking up further easier a connecting spring is used, which connects the male part with the female part during step 2, with the result that the user does not have to observe the refilling process. Instead the user can rest or do something else. According to the invention there is now created a system having a tanking valve, which is not bulky, friendly to the environment, healthy and practical and by which a quicker tanking can be made.

The invention is further described by help of some functional examples with reference to the drawings, on which
- fig. 1: shows a refilling valve according to the invention in cross-section before refilling,
- fig. 2: shows a part of a refilling valve according to the invention in cross-section during step 1 in the finishing phase and
- fig. 3: shows a part of a refilling valve according to the invention in cross-section in step 2.

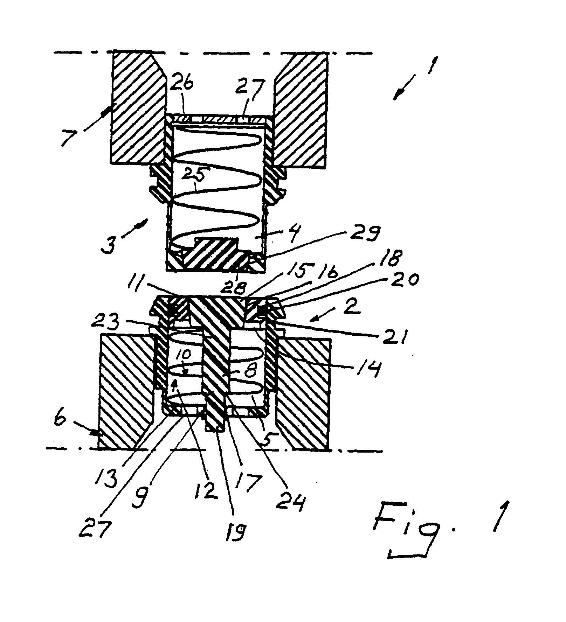

As can be seen in more detail of the embodiment form of the invention illustrated in fig. 1, a refilling valve 1 comprises a female part 2, which is mounted at a equipment tank 6 and a male part 3, which is mounted in a refilling outfit 7 before a step 1 starts with each of housings 4 and 5. In the house 5 a piston 8 is movably fixed in a guiding hole 9, which in turn is fixed with a fixing part 17. Around the piston 8, having a cover part 15, a female spring 10 is pressing, which has its first tension point in the bottom of the house 13 and a second tension point in an upper rest surface 14 , which is located in a slide 11, so that the female spring 10 presses the slide 11 in a direction according to an arrow 12. Since the cover part 15 and the slide 11 show a radial coned side 16, the cover part follows in the same direction, as said arrow 12. The piston 8 shows a wider part 23 and a thinner part 19, which only makes it possible for the piston to be pressed down to a point, where a piston stop 24 meets the bottom of the house 13. The slide 11 comprises a radial groove 18 around the same. In this groove 18 an 0-ring is placed and tightens against a tightening surface 21. In the bottom of the house 13 there is a flowing hole 27, where fuel and gas can flow through. The male part 3 shows a male part spring 25, which has its one tension point against for instance a tension slide or against the bottom 26 of the house 4, which also has flowing holes 27 or just one big hole and its second tension point against the lid 28, which is tighten against the lid stop 29.

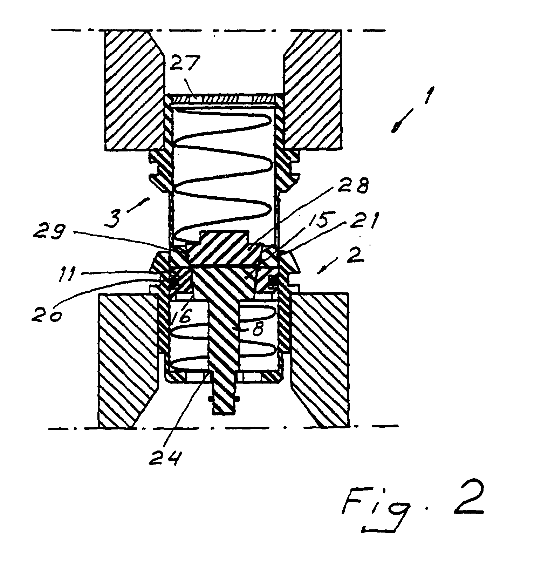

More closely the function appears of the embodiment example illustrated in fig. 2, where the tanking system 1 is shown in the finish phase of step 1, when the male part 3 is pressed into the female part 2 against the slide 11 and the cover part 15, at which the piston 8 touches the piston stop 24, before the slide 11 has been uncovered from the cover part 15, when the radial coned side 16 also is still tightening. The tightening surfaces 21 are tightening at the opening of the valve 1, as the lid 28 moves towards the lid stop 29. The 0-ring is always tightening.

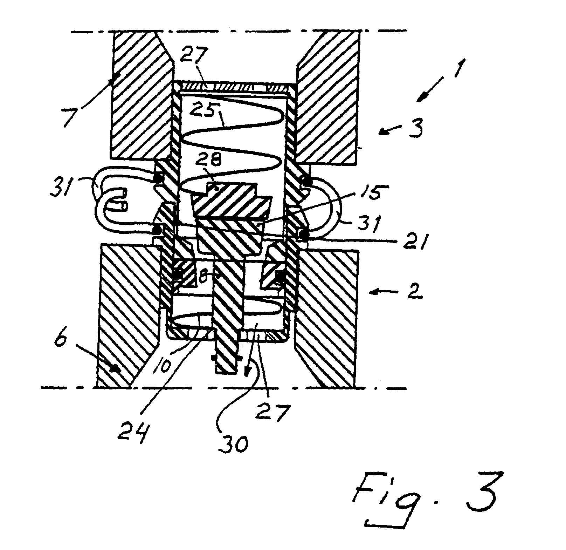

As can be seen more closely of the function of embodiment example illustrated in fig. 3, the tanking system 1 is shown in step 2, when the piston 8 is quite at the bottom, where it has stopped against the piston stop 24 and via the cover part 15, has pressed up the lid 28 into the male part 3 in an open position, so that the fuel flows down into the female part 2 and then through the flowing holes 27 in a direction according to an arrow 30 and further into the equipment tank 6. At the same time the tightening surfaces 21 are tightening better when having a wider contact surface, and by that a closed room has been established between the equipment tank 6 and the refilling outfit 7. To make the tanking up easier and not have to hold out against the pressure the male part spring 25 and the female part spring 10 create, a coupling spring 31 is used, which unloads this pressure during the refilling procedure.

## Claims

1. A tanking valve (1) for performing a fuel refilling comprising a female part (2) being connectable to an equipment tank (6) and a refilling outfit (7) and said tanking valve (1) further comprising a male part (3) such that, when in use, the refilling is being performed in at least two steps before the opening of said tanking valve (1) during which a closed space including said refilling outfit (7) and said equipment tank (6) is formed by means of tightening surfaces (21) on said female and male parts (2,3), **characterized in that** said female part (2) comprises a cover part (15) provided with a piston (8), an end piston stop (24), and further comprises a slide (11) being adjacent to said cover part (15) and being located around said cover part (15), said cover part (15) being suitable for tightly fitting with said slide (11) and being movable together with said slide (11); and **in that** said male part (3) comprises a lid (28) and a lid stop (29), wherein during refilling, during a first of said at least two steps said lid (28), and said slide (11) with said cover part (15), are biased by springs (10,25) comprised in the tanking valve towards their respective mutually adjacent free end portions and, when said male part (3) is pressed into said female part (2), said lid (28) presses against said cover part (15) and/or said slide (11), said cover part (15) and said slide (11) being tightly pressed together, and are moved along a predetermined path distance into said female part (2) until the stopping of said piston (8) against said end piston stop (24), while during a second step of said at least two steps said male part (3) is pressed deeper into said female part (2) until said slide (11) and said cover part (15) are separated from each other, the biased lid (28) being pressed into said male part (3) by said cover part (15) since said piston (8) stops against said end piston stop (24) and afterwards during said second step said slide (11) is set free from said cover part (15) and said lid (28) is set free from said lid stop (29) so that the fuel can flow through said tank valve (1).

2. A tanking valve according to claim 1, **characterized in that** said piston (8) comprises an outer, thinner part (19), which is arranged during the first step to be guided in a guiding hole (9) in the bottom of the house (13) of the female part (2) at the same time as said slide (11) and said cover part (15) are tightening against each other.

3. A tanking valve according to claim 1, **characterized in that** the biased lid (28) of said male part (3) is during the first step pressed against the biased slide (11) of said female part (2) with belonging cover part (15) without these being separateable from each other.

4. A tanking valve according to claim 1, **characterized in that** said piston (8) is movably attached to a fixing part (17) of said female part (2) next to said guiding hole (9).

5. A tanking valve according to claim 1 or 2, **characterized in that** said slide (11) comprises at least one radial groove (18) to accommodate an O-ring (20), which tightens against the female tightening surface (21).

6. A tanking valve according to any of the preceding claims, **characterized in that** before the second step starts the lids is tightly spring biased in a closed position against an end lid stop (29).

7. A tanking valve according to any of the preceding claims, **characterized in that** at least one coupling spring (31) during a part of the first step and/or the second step keeps the male part (3) and the female part (2) together.

## Patentansprüche

1. Tankventil (1) zum Nachfüllen von Kraftstoff mit einem aufnehmenden Teil (2), das mit einem Gerätebehälter (6) und einer Nachfüllausrüstung (7) verbunden werden kann, und wobei das Tankventil (1) weiter einen äußeren Teil (3) umfasst, so dass, bei Gebrauch, das Auffüllen in mindestens zwei Schritten vor dem Öffnen des Tankventils (1) erfolgt, während derer ein geschlossener Raum, welcher die Nachfüllausrüstung (7) und den Gerätebehälter (6) enthält, mithilfe von Dichtflächen (21) auf dem aufnehmenden und dem äußeren Teil (2, 3) gebildet wird, **dadurch gekennzeichnet, dass** der aufnehmende Teil (2) eine Abdeckung (15) mit einem Kolben (8), einen Kolbenendanschlag (24) und außerdem einen Schlitten (11) umfasst, der an die Abdeckung (15) angrenzt und um die Abdeckung (15) angeordnet ist, wobei die Abdeckung (15) fest an dem Schlitten (11) angeordnet und zusammen mit dem Schlitten (11) bewegt werden kann; und **dass** der äußere Teil (3) einen Deckel (28) und einen Deckelanschlag (29) umfasst, worin beim Nachfüllen, während eines ersten der mindestens zwei Schritte, der Deckel (28) und der Schlitten (11) mit der Abdeckung (15) durch in dem Tankventil enthaltene Federn (10, 25) gegen ihre entsprechenden jeweils benachbarten freien Endabschnitte vorgespannt sind und, wenn der äußere Teil (3) in den aufnehmenden Teil (2) hineingedrückt wird, der Deckel (28) gegen die Abdeckung (15) und/oder den Schlitten (11) drückt, die Abdeckung (15) und der Schlitten (11) fest zusammengedrückt werden und entlang einer vorbestimmten Wegstrecke in den aufnehmenden Teil (2) bewegt werden, bis der Kolben (8) an dem Kolbenendanschlag (24) anschlägt, wobei während eines zweiten Schrittes der mindestens zwei Schritte der äußere Teil (3) tiefer in den aufnehmenden Teil (2) hineingedrückt wird, bis der Schlitten (11) und die Abdeckung (15) voneinander getrennt sind, der vorgespannte Deckel (28) in den äußeren Teil (3) durch die Abdeckung (15) gedrückt wird, da der Kolben (8) an dem Kolbenendanschlag (24) anschlägt, und danach, während des zweiten Schrittes, der Schlitten (11) von der Abdeckung (15) freikommt und der Deckel (28) von dem Deckelanschlag (29) freikommt, so dass der Kraftstoff durch das Tankventil (1) fließen kann.

2. Tankventil nach Anspruch 1, **dadurch gekennzeichnet, dass** der Kolben (8) ein äußeres dünneres Teil (19) umfasst, das während des ersten Schrittes derart angeordnet wird, dass es in eine Führungsöffnung (9) im Boden des Gehäuses (13) des aufnehmenden Teils (2) einzuführen ist, wobei zur selben Zeit der Schlitten (11) und die Abdeckung (15) gegeneinander festmachen.

3. Tankventil nach Anspruch 1, **dadurch gekennzeichnet, dass** der vorgespannte Deckel (28) des äußeren Teils (3) während des ersten Schrittes gegen den vorgespannten Schlitten (11) des aufnehmenden Teils (2) mit der zugehörigen Abdeckung (15) gedrückt wird, ohne dass diese voneinander getrennt werden können.

4. Tankventil nach Anspruch 1, **dadurch gekennzeichnet, dass** der Kolben (8) bewegbar an einem Befestigungsteil (17) des aufnehmenden Teils (2) nahe der Führungsöffnung (9) befestigt ist.

5. Tankventil nach einem der Ansprüche 1 oder 2, **dadurch gekennzeichnet, dass** der Schlitten (11) wenigstens eine Ringnut (18) umfasst, um einen O-Ring (20) aufzunehmen, der gegen die aufnehmende Dichtfläche (21) spannt.

6. Tankventil nach einem der vorhergehenden Ansprüche, **dadurch gekennzeichnet, dass**, vor Beginn des zweiten Schrittes, der Deckel in einer geschlossenen Stellung fest gegen einen Deckelendanschlag (29) vorgespannt ist.

7. Tankventil nach einem der vorhergehenden Ansprüche, **dadurch gekennzeichnet, dass** wenigstens eine Kopplungsfeder (31) während eines Teils des ersten Schrittes und/oder des zweiten Schrittes den äußeren Teil (3) und den aufnehmenden Teil (2) zusammenhält.

## Revendications

1. Vanne (1) de remplissage pour effectuer un remplissage de carburant comportant une partie (2) femelle qui peut être connectée à un réservoir (6) d'équipement et un appareillage (7) de remplissage et la vanne (1) de remplissage comportant en outre une partie (3) mâle telle que, en utilisation, le remplissage est effectué en au moins deux étapes avant l'ouverture de la vanne (1) de remplissage pendant laquelle un espace fermé incluant l'appareillage (7) de remplissage et le réservoir (6) d'équipement est formé au moyen de surfaces (21) d'étanchéité sur les parties (2, 3) femelle et mâle, **caractérisée en ce que** la partie (2) femelle comporte une partie (15) de recouvrement munie d'un piston (8), d'une butée (24) de fin de piston, et comporte en outre un coulisseau (11) qui est voisin de la partie (15) de recouvrement et qui est situé autour de la partie (15) de recouvrement, la partie (15) de recouvrement étant appropriée pour s'adapter de manière serrée au coulisseau (11) et étant mobile ensemble avec le coulisseau (11) ; et **en ce que** la partie (3) mâle comporte un couvercle (28) et une butée (29) de couvercle, dans lequel pendant le remplissage, pendant une première étape desdites au moins deux étapes, le couvercle (28) et le coulisseau (11) avec la partie (15) de recouvrement, sont sollicités par des ressorts (10, 25) se trouvant dans la vanne de remplissage en direction de leurs parties d'extrémité libre mutuellement voisines respectives, et lorsque la partie (3) mâle est pressée dans la partie (2) femelle, le couvercle (28) presse contre la partie (15) de recouvrement et/ou le coulisseau (11), la partie (15) de recouvrement et le coulisseau (11) étant pressés de manière étanche l'un contre l'autre, et étant déplacés le long d'un trajet déterminé à l'avance sur une certaine distance dans la partie (2) femelle jusqu'à ce que s'arrête le piston (8) contre la butée (24) de fin de piston, tandis que pendant une deuxième étape desdites au moins deux étapes la partie (3) mâle est pressée plus profondément dans la partie (2) femelle jusqu'à ce que le coulisseau (11) et la partie (15) de recouvrement soient séparés l'un de l'autre, le couvercle (28) sollicité étant pressé dans la partie (3) mâle par la partie (15) de recouvrement puisque le piston (8) s'arrête contre la butée (24) de fin de piston et après cela pendant la deuxième étape le coulisseau (11) est rendu libre de la partie (15) de recouvrement et le couvercle (28) est rendu libre de la butée (29) de couvercle de sorte que le carburant peut passer par la vanne (1) de remplissage.

2. Vanne de remplissage suivant la revendication 1, **caractérisée en ce que** le piston (8) comporte une partie (19) extérieure amincie qui est agencée pendant la première étape pour être guidée dans un trou (9) de guidage dans le fond du boîtier (13) de la partie (2) femelle en même temps que le coulisseau (11) et la partie (15) de recouvrement sont serrés l'un contre l'autre.

3. Vanne de remplissage suivant la revendication 1, **caractérisée en ce que** le couvercle (28) sollicité de la partie (3) mâle est pendant la première étape pressé contre le coulisseau (11) sollicité de la partie (2) femelle avec la partie (15) de recouvrement qui lui appartient sans que ceux-ci puissent être séparés l'un de l'autre.

4. Vanne de remplissage suivant la revendication 1, **caractérisée en ce que** le piston (8) est fixé de manière amovible à une partie (17) de fixation de la partie (2) femelle à proximité du trou (9) de guidage.

5. Vanne de remplissage suivant la revendication 1 ou 2, **caractérisée en ce que** le coulisseau (11) comporte au moins une rainure (18) radiale pour recevoir une bague (20) d'étanchéité torique, qui est serrée contre la surface (21) d'étanchéité femelle.

6. Vanne de remplissage suivant l'une quelconque des revendications précédentes, **caractérisée en ce que**, avant que la deuxième étape ne débute, le couvercle est sollicité par ressort de manière étanche dans une position fermée contre une butée (29) de fin de couvercle.

7. Vanne de remplissage suivant l'une quelconque des revendications précédentes, **caractérisée en ce que**, au moins un ressort (31) de couplage pendant une partie de la première étape et/ou de la deuxième étape maintient la partie (3) mâle et la partie (2) femelle ensemble.
